# EUROPÄISCHE PATENTSCHRIFT

(11) **EP 2 810 735 B1**
(45) Veröffentlichungstag und Bekanntmachung des Hinweises auf die Patenterteilung: **10.08.2016**
(21) Anmeldenummer: 13002881.4
(22) Anmeldetag: 05.06.2013
(51) Int. Cl.: B23K 20/12

(54) **Reibrührwerkzeug mit nicht- umfänglicher Schulter und damit durchführbares Reibrührverfahren**
Friction stir welding tool and method with a non-circumferential shoulder
Outil et procédé de soudage par friction malaxage avec un épaulement non circonférentiel

(43) Veröffentlichungstag der Anmeldung: 10.12.2014
(73) Patentinhaber: Airbus Defence and Space GmbH, 85521 Ottobrunn (DE)
(72) Erfinder: Jürgen, Silvanus, 82008 Unterhaching (DE); Brunzel, Tommy, 08393 Meerane (DE)
(74) Vertreter: Kastel, Stefan

(56) Entgegenhaltungen:
- WO-A2-2009/127981
- US-A1- 2009 120 995

## Beschreibung

Die Erfindung betrifft ein Reibrührwerkzeug zum Reibrühren, mit einer Schulter zum Anpressen auf eine Werkstückoberfläche und einem über die Schulter vorstehenden, drehend antreibbaren Stift zum plastifizierenden Einführen in wenigstens ein zu bearbeitendes Werkstück. Weiter betrifft die Erfindung eine mit einem solchen Reibrührwerkzeug versehene Reibrührvorrichtung. Weiter betrifft die Erfindung ein mit einem solchen Reibrührwerkzeug bzw. einer solchen Reibrührvorrichtung durchführbares Reibrührverfahren.

Die Erfindung liegt auf dem Gebiet des Reibrührens (Englisch: "Friction Stir Processing"), das beim Reparieren, Bearbeiten und Veredeln und insbesondere beim Verbinden von Werkstücken Anwendung findet. Bei dem Reibrühren wird ein stiftförmiger Vorsprung unter drehender Bewegung in zumindest ein Werkstück eingeführt, um das Werkstückmaterial wenigstens im Kontaktbereich des Schweißstiftes zu modifizieren. Zu Reparaturzwecken wird der rotierende Stift beispielsweise in einen Riss eines Werkstückes eingeführt.

Ein Sonderfall des Reibrührens ist das Reibrührschweißen oder "Friction Stir Welding" (FSW), das zunehmend in der Luft- und Raumfahrttechnik, in der Schienenverkehrstechnik, Unterhaltungselektronik, sowie im Automobilbau eingesetzt wird. Es handelt sich dabei um ein einfaches, sauberes und innovatives Fügeverfahren, das sich durch einen hohen Wirkungsgrad und ein hohes Automatisierungspotential auszeichnet, wodurch Herstellungskosten gesenkt werden und das Gewicht daraus hergestellter Strukturen reduziert wird.

Das Reibrührschweißen ist insbesondere in der WO 93/10935 beschrieben. Dabei werden zwei miteinander zu verschweißende Werkstücke in Kontakt gebracht und in dieser Position gehalten. In den Verbindungsbereich der Werkstücke wird unter drehender Bewegung ein Schweißstift oder stiftförmiger Vorsprung eines entsprechenden Werkzeuges eingeführt, bis eine oberhalb des Stiftes an dem Werkzeug angeordnete Schulter auf der Oberfläche der Werkstücke aufliegt. Dabei wird durch die Relativbewegung zwischen Werkzeug und Werkstücken Reibungswärme generiert, so dass benachbarte Werkstoffbereiche im Verbindungsbereich einen plastifizierten Zustand einnehmen. Das Werkzeug wird, während der rotierende Stift in Kontakt mit dem Verbindungsbereich steht, entlang einer Verbindungslinie der Werkstücke vorwärts in Vorschubrichtung bewegt, so dass der sich um den Stift befindende Werkstoff plastifiziert und anschließend konsolidiert. Bevor das Material völlig erhärtet, wird der Schweißstift aus dem Verbindungsbereich bzw. den Werkstücken entfernt.

Aus der WO2009/127981 ist ein Reibrühr-Werkzeug mit einer einen Stift an dessen gesamten Umfang umgebenden Schulter bekannt, wobei die Schulter eine axiale Durchgangsöffnung zum Einführen einer Verstärkungsfaser aufweist. Damit kann ein Schweißnaht an Werkstücken aus faserverstärkten Kunststoffen hergestellt werden, welche Schweißnaht selbst durch eine Verstärkungsfaser verstärkt ist.

Aus der US 2009/0120995 A1 ist ein Reibrühr-Werkzeug mit einem Stift, einer den Stift vollständig umgebenden, radial inneren ersten Schulter und eine radial außerhalb der ersten Schulter um diese herum angeordneten äußeren zweiten Schulter bekannt. Die zweite Schulter ist in einer Ausführungsform nicht durchgängig, sondern weist zwei Unterbrechungsöffnungen auf, die aber nur bis zur ersten Schulter reichen, welche wiederum den Stift vollständig umgibt. Die Konfiguration mit einer inneren ersten Schulter und einer äußeren zweiten Schulter ist für das Schweißen sehr dünner Blechlagen gewählt, um ein Aufbeulen der dünnen Blechlagen zu minimieren.

Aus der DE 10 2005 030 800 B4 sind ein Reibrühr-Werkzeug, eine damit versehene Reibrührvorrichtung sowie ein Reibrührverfahren in Form eines Reibrührschweißverfahrens zum Verschweißen von zumindest zwei aneinander liegenden Werkstücken entlang einer Verbindungslinie mittels Reibrühren bekannt. Das aus der DE 10 2005 030 800 B4 bekannte Reibrührschweißverfahren zeichnet sich dadurch aus, dass im Gegensatz zu den zuvor bekannten Reibrührschweißverfahren während des Schweißvorganges lediglich der Stift drehend angetrieben wird, während die Schulter mit einer Drehzahl n=0 gehalten wird. Die Schulter und der Stift sind somit relativ zueinander drehbar ausgebildet. Damit lässt sich eine Vielzahl von schwierigen Schweißaufgaben bewerkstelligen.

Eine größere Herausforderung stellt weiterhin eine Verbindung von unterschiedlich dicken Werkstücken dar. Insbesondere ein Reibrührschweißen entlang einer Stufe oder eines Kantenversatzes zwischen den Werkstücken ist alles andere als trivial.

Bei der DE 100 63 920 A1 wird hierzu vorgeschlagen, an dem Kantenversatz einen Sockel anzulegen, der das dünnere Werkstück unterstützt und dann von der Rückseite her, wo die beiden Werkstücke mit ihren oberen Außenseiten in einer Ebene liegen, das Reibrührschweißverfahren durchzuführen. Ein derartiges Schweißverfahren lässt sich aber nicht bei allen Schweißaufgaben durchführen, oft ist ein Schweißen gerade von der Seite mit dem Kantenversatz her erwünscht. Insbesondere ist es erwünscht, anstelle des Kantenversatzes einen entsprechend abgeflachten oder abgeschrägten Übergang zu erzeugen. Allerdings ist gerade dies, wie dies in der DE 100 63 920 A1 erläutert ist, mit Schwierigkeiten verbunden.

In der DE 102 96 452 T5 (deutsche Übersetzung der WO 02/070186) und der DE 601 08 812 T2 (deutsche Übersetzung der EP 1 166 946 B1) wird zum Verbinden von zwei unterschiedlich dicken Werkstücken mit Kantenversatz vorgeschlagen, das Reibrühr-Werkzeug mit Schulter und von der Schulter vorstehenden Stift unter einem Anstellwinkel relativ zu den zu verbindenden Werkstücken anzusetzen und mit diesem Anstellwinkel in Vorschubrichtung zum Bilden der Schweißnaht zu verfahren.

Hierzu wird gemäß der DE 102 96 452 T5 das sich im Ganzen drehende Reibrühr-Werkzeug mit Schulter und integral mit der Schulter ausgebildeten vorstehenden Stift mit schräg zu der Oberfläche der zu verbindenden Werkstücke angestellter Rotationsachse in Vorschubrichtung über die Verbindungslinie verfahren. Dies lässt sich beispielsweise mittels eines Roboterarms mit mehreren Gelenken erreichen. Allerdings ist die Prozessführung eines solchen Schweißverfahrens alles andere als trivial. Der Roboter muss mit mindestens fünf Gelenken versehen sein und entsprechend genau geführt werden. Daher ist eine komplizierte Reibrührvorrichtung mit komplizierter Halterung für das Reibrührwerkzeug vorzusehen.

Bei der DE 601 08 812 T2 wird dagegen vorgeschlagen, die zu verbindenden Werkstücke auf einer schiefen Ebene abzustützen, um so den schrägen Anstellwinkel für das ebenfalls im Ganzen rotierende Werkzeug vorzusehen. Auch dies ist nicht trivial, da die Werkstücke entsprechend schwieriger auf der schiefen Ebene gelagert werden müssen.

Allgemein ist die Schulter von Reibrührwerkzeugen dazu vorgesehen, ein Austreten plastifizierenden Materials zu vermeiden. Die Schulter wirkt somit dichtend, um das plastifizierte Material an der Schweißstelle zu halten. Die Schulter ist im gesamten Stand der Technik an einem kreiszylinderförmigen Körper um den Stift herumlaufend vorgesehen, um diese Dichtaufgabe zu erfüllen. Die Rotationssymmetrie und das vollständige Umlaufen der Schulter in Umfangsrichtung um die Rotationsachse des Stiftes herum sind gemäß dem Stand der Technik absolut notwendige Merkmale, um die Funktion der Schulter zu erfüllen. Dies gilt insbesondere für Schultern von einstückig drehenden Reibrührwerkzeugen, die zum Schweißen an einer Stufe bzw. einem Kantenversatz von Werkstücken eingesetzt werden. Gerade das Schweißen an einem Kantenversatz bereitet jedoch weiterhin Schwierigkeiten. Wie in der DE 100 63 920 A1 ausgeführt, erweicht z.B. beim Schweißen von Werkstücken mit Kantenversatz die obere freie Kante des dickeren Werkstückes und wird von der Reibfläche des Werkzeuges - welche an der Schulter vorgesehen ist - auf die Höhe des dünneren Bleches bzw. zum Bilden eines Übergangsbereiches flachgedrückt. Dabei bildet sich aber neben dem Werkzeug eine nicht erwünschte Wulst. Außerdem können nur kleine Dickensprünge ausgeglichen werden. Bei größeren Dickensprüngen ergibt sich am Dickenübergang eine hinsichtlich der Weiterverarbeitung des gefügten Bauteils kritische Kerbwirkung, die zu Bauteilversagen führen kann.

Von daher muss bei bisherigen Reibrührschweißverfahren mit Kantenversatz ein passender schräger Anstellwinkel ausgewählt werden und während des Schweißvorgangs eingehalten werden. Dies ist prozesstechnisch schwierig zu handhaben.

Es ist daher Aufgabe der Erfindung, ein Reibrührwerkzeug und eine damit versehene Reibrührvorrichtung zu schaffen, mit der insbesondere - aber nicht ausschließlich - ein Reibrührschweißen von Fügeteilen mit Kantenversatz unter Gewährleistung einer robusten Prozessführung auch unter sich veränderenden Randbedingungen, jedoch in einfacherer Weise und mit einfacheren Mitteln als bisher durchführbar ist.

Diese Aufgabe wird durch ein Reibrührwerkzeug mit den Merkmalen des beigefügten Anspruches 1 gelöst. Eine damit versehene Reibrührvorrichtung ist Gegenstand des Nebenanspruches. Ein mit einem solchen Reibrührwerkzeug und einer solchen Reibrührvorrichtung durchführbares Reibrührverfahren ist Gegenstand des weiteren Nebenanspruches.

Vorteilhafte Ausgestaltungen der Erfindung sind Gegenstand der Unteransprüche. Die Erfindung schafft gemäß einem Aspekt davon ein Reibrührwerkzeug zum Reibrühren, mit einer Schulter zum Anpressen auf eine Werkstückoberfläche und einem über die Schulter vorstehenden, drehend antreibbaren Stift zum plastifizierenden Einführen in wenigstens ein zu bearbeitendes Werkstück, wobei die Schulter an einem Umfangsbereich in einem zum Reibangriff auf Werkstücke ausgebildeten Erfassungsbereich eine Unterbrechungsöffnung aufweist, die in dem Erfassungsbereich durchgängig von außen bis hin zum Stift reicht, so dass die Schulter nicht vollumfänglich um den Stift herum geführt ist.

Mit anderen Worten wird ein Reibrührwerkzeug mit nicht-umfänglicher Schulter geschaffen.

Die Nutzung eines üblichen Reibrührwerkzeugs der in der DE 102 96 452 T5 oder der DE 601 08 812 T2 gezeigten Art unter Verwendung eines schrägen Anstellwinkels schafft zwar Robustheit bei der Verscheißung von Fügeteilen mit Kantenversatz, bedingt aber eine aufwändige Handhabungstechnik, insbesondere bei der Ausführung von nichtlinearen Nähten. Insbesondere wenn sich die Vorschubrichtung ändert, muss der Anstellwinkel nachgeführt werden. Weiter ist der positive Effekt des Werkzeug-Anstellwinkels zur Erhöhung der Prozesstoleranz gegen Kantenversatz begrenzt.

Demgegenüber wird bei der Erfindung ein anderer Ansatz gewählt. Gemäß der Erfindung wird keine vollständig in Umfangsrichtung umlaufende Schulter verwendet, vielmehr weist die Schulter an einem Umfangsbereich eine Unterbrechungsöffnung auf. Vorzugsweise ist der Stift nicht vollständig von der Schulter umgeben. Wie Versuche gezeigt haben, kann mit einer bevorzugten Ausführungsform vorzugsweise unter Verwendung einer nicht-rotierenden Schulter durch eine Öffnung der Werkzeugschulter eine extreme Prozesstoleranz gegen Kantenversatz erzielt werden, ohne einen Anstellwinkel einstellen zu müssen und dessen Komplikationen in Kauf nehmen zu müssen.

Insgesamt lässt sich mit einem Reibrührwerkzeug gemäß der Erfindung oder dessen vorteilhaften Ausgestaltungen die Prozessrobustheit erhöhen und die Handhabungstechnik wesentlich vereinfachen.

Es ist bevorzugt, dass die Unterbrechungsöffnung in Axialrichtung relativ zur Drehachse des Stifts gesehen kreissegmentförmig ausgebildet ist.

Es ist bevorzugt, dass das Reibrührwerkzeug als Reibrührschweißwerkzeug zum Verbinden zweier Werkstücke entlang einer Schweißnaht durch Reibrührschweißen ausgebildet ist.

Es ist bevorzugt, dass der Stift relativ zu der Schulter drehbar ist und/oder dass die Schulter dazu ausgebildet ist, bei im Zuge des Reibrührens drehendem Stift eine Drehzahl n=0 aufzuweisen.

Gemäß einem weiteren Aspekt schafft die Erfindung eine Reibrührvorrichtung mit einem Reibrührwerkzeug der zuvor genannten Art mit nicht-umlaufender Schulter und eine Werkzeugführungseinrichtung zum Bewegen und Führen des Reibrührwerkzeugs in eine Vorschubrichtung, z.B. während eines Nahtschweißens. Die Reibrührvorrichtung ist derart ausgebildet, dass die Unterbrechungsöffnung der Schulter in Vorschubrichtung gerichtet ist.

Gemäß eines weiteren Aspekts schafft die Erfindung ein Reibrührverfahren zur Bearbeitung wenigstens eines Werkstücks mittels Reibrührens, umfassend die Schritte: Einführen eines drehenden Stiftes in das wenigstens eine Werkstück und Plastifizieren des Werkstückmaterials durch Reibrühren, Verhindern eines Austretens von plastifiziertem Material durch Aufpressen einer den Stift zumindest teilweise umgebenden Schulter mit einem Erfassungsbereich der Schulter auf die Oberfläche des wenigstens einen Werkstücks, wobei eine Schulter mit einer Unterbrechungsöffnung an einem Umfangsbreich verwendet wird, die im Erfassungsbereich durchgängig von außen bis hin zum Stift reicht, so dass die Schulter den Stift nicht vollständig umgibt.

Es ist bevorzugt, dass das Reibrührverfahren ein Reibrührschweißverfahren zum Verbinden eines ersten und eines zweiten Werkstückes mittels Reibrührschweißens ist.

Eine bevorzugte Ausgestaltung eines solchen Reibrührschweißverfahrens weist die Schritte auf:
Bewegen des Stifts und der Schulter in einer Vorschubrichtung zum Bilden einer Schweißnaht,
Festhalten der Schulter während des Schweißvorganges bei drehendem Stift mit in Vorschubrichtung orientierter Unterbrechungsöffnung, so dass die Schulter nicht drehend mit nach vorne in Vorschubrichtung orientierter Unterbrechungsöffnung über die zu bildende Schweißnaht bewegt wird.

Weiter bevorzugt ist folgender Schritt vorgesehen: Verschweißen des ersten Werkstückes und des zweiten Werkstückes entlang einer Stufe oder eines Kantenversatzes zwischen den Werkstücken.

Versuche haben gezeigt, dass man durch Verlassen des bisher eingetretenen Pfades, wonach die Schulter stets notwendigerweise um den Stift herum geführt worden ist, und vielmehr durch Vorsehen einer teilweise am Umfang mit einer Unterbrechungsöffnung versehenen Schulter ein besseres Verschweißen im Bereich von Kantenversätzen von Werkstücken erzielen kann. Die Dichtaufgabe der Schulter lässt sich im Bereich der Unterbrechungsöffnung durch die nach oben vorstehende Kante erreichen.

Hierzu wird beim Durchführen eines Reibrührschweißverfahrens vorzugsweise die Unterbrechungsöffnung nach vorne in Vorschubrichtung ausgerichtet, so dass die Kante durch die Unterbrechungsöffnung hindurch zu dem drehenden Stift in das Reibrührwerkzeug hinein geführt wird. Dort wird die Kante durch die Reibwärme, welche durch das Drehen des Stiftes erzeugt wird, plastifiziert. Das noch nicht plastifizierte Material der Kante sorgt dafür, dass das bereits plastifizierte Material nicht an der Unterbrechungsöffnung heraustritt. Die Schulter ist vorzugsweise derart ausgeführt, dass die Schulter an den übrigen Bereichen den Stift vollständig umgibt. Beispielsweise ist die Schulter auf einem Segment des Gesamtumfangs mit einem Winkelbereich von 0° bis 90° geöffnet, vorzugsweise mit einem Winkelbereich von ca. 5° bis 45°. Auf dem restlichen Bereich des gesamten Umfangs ist die Schulter weiterhin vorhanden.

Die Schulter wird vorzugsweise relativ zu den zu bearbeitenden Werkstücken festgehalten, so dass sie sich nicht mit dem Stift mitdreht. Hierzu können die Maßnahmen getroffen sein, wie sie in der DE 10 2005 030 800 B4 beschrieben und gezeigt sind. Bei einer Ausgestaltung kann die Schulter über ein Lager auf einem drehend angetriebenen, den Stift aufweisenden Drehkörper aufgesetzt sein. Eine derartige Schulter wird durch das Aufsetzen auf die Werkstücke festgehalten, auch wenn der Stift drehend angetrieben wird. Schiebt man dann das Reibrührwerkzeug in Vorschubrichtung heran, kann die Unterbrechungsöffnung dem Kantenverlauf folgen.

Bei einer anderen Ausgestaltung wird die Schulter separat zu dem Stift an einer eigenen Halterung gehalten. Diese Halterung kann auch gesteuert drehbar ausgebildet sein, um so die Ausrichtung der Schulter einer Änderung der Vorschubrichtung anzupassen.

Andererseits muss die Schulter nicht unbedingt stillstehend ausgebildet sein, sie könnte auch in Winkelbereichen hin- und herschwingend gehalten sein, um so bei Bedarf zusätzliche Reibungswärme zu erzeugen. Hierzu könnte beispielsweise eine Anordnung ähnlich wie in Fig. 3 der EP 1 021 270 B1 herangezogen werden, mit der Modifikation, dass die Schulter eine - z.B. entsprechend bis zum Stift hin reichende - Unterbrechungsöffnung auf einem Teilbereich des Umfanges aufweist.

Vorteilhafte Anwendungsgebiete der Erfindung umfassen ein Verbinden unterschiedlich dicker Werkstücke, z.B. eine Verbindung unterschiedlich dicker Bleche - Stichwort: Taylored Blanks -.

Ausführungsbeispiele der Erfindung werden hiernach anhand der Zeichnungen näher erläutert. Darin zeigt:
- Fig. 1: ein erstes Werkstück und ein zweites Werkstück, die mit einem Kantenversatz aneinander anliegen und im Bereich des Kantenversatzes durch ein Reibrührverfahren miteinander zu verbinden sind;
- Fig. 2: eine Seitenansicht auf eine Ausführungsform eines Reibrührwerkzeugs zum Durchführen des Reibrührverfahrens;
- Fig. 3: eine Draufsicht auf das Werkzeug von Fig. 2;
- Fig. 4: eine schematische, stark vereinfachte Darstellung einer Ausführungsform einer Reibrührvorrichtung; und
- Fig. 5: eine schematische Skizze, die eine Durchführung eines Reibrührschweißverfahrens zum Verschweißen der beiden in Fig. 1 gezeigten Werkstücke mittels des in den Fig. 2 und 3 gezeigten Reibrührwerkzeuges andeutet.

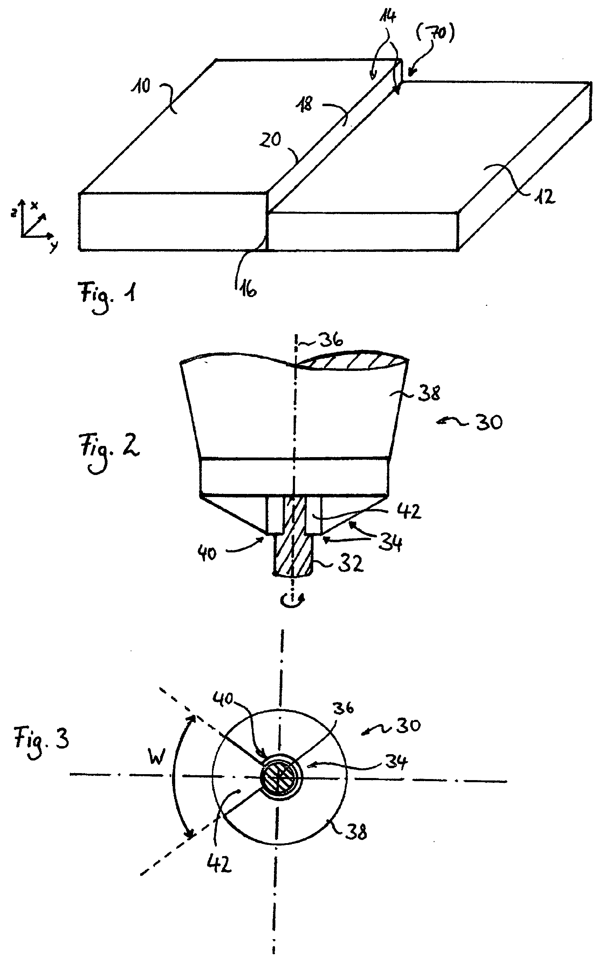

In Fig. 1 sind ein erstes Werkstück 10 und ein zweites Werkstück 12 gezeigt, die im Stumpfstoß nebeneinander gelegt sind und miteinander zu verschweißen sind. Das erste Werkstück 10 ist dicker als das zweite Werkstück 12. Dadurch entsteht an einer Werkstückoberfläche 14 im Bereich des Stumpfstoßes 16 ein Kantenversatz 18, der bei noch unverschweißten Werkstücken 10, 12 in Form einer Stufe 20 vorliegt.

Die beiden Werkstücke 10, 12 sollen im Bereich des Stumpfstoßes 16 mittels eines Reibrührschweißverfahrens miteinander verbunden werden.

Fig. 2 zeigt hierzu ein Ausführungsbeispiel eines Reibrührwerkzeuges 30 zum Reibrühren, wobei das Reibrührwerkzeug 30 einen drehend antreibbaren Stift 32 (auch Sonde, Schweißstift oder Schweißsonde genannt) aufweist, der von einer Schulter 34 in Axialrichtung bezüglich einer Drehachse 36 des Stiftes 32 gesehen vorsteht.

Die Schulter 34 ist an einem Körper 38 des Reibrührwerkzeuges 30 ausgebildet. Vorzugsweise ist der Körper 38 relativ zu dem Stift 32 drehbar ausgebildet.

Fig. 3 zeigt eine Ansicht auf das Reibrührwerkzeug 30 in einer vergleichbaren Ausbildung wie diejenige von Fig. 2, in Axialrichtung von unten in Fig. 2 gesehen.

Wie in den Fig. 2 und 3 gezeigt, ist die Schulter 34 nicht vollumfänglich um den Stift 32 herum in Umfangsrichtung geführt, vielmehr weist die Schulter 34 im Erfassungsbereich 40, der zum Reibangriff auf die Werkstücke 10, 12 ausgebildet ist, eine Unterbrechungsöffnung 42 auf. Die Unterbrechungsöffnung 42 reicht vom Außenumfang der Schulter 34 im Erfassungsbereich 40 bis durchgängig hin zum Stift 32.

Die Unterbrechungsöffnung 42 ist insbesondere in Draufsicht in Axialrichtung gesehen (siehe Fig. 3) kreissegmentartig ausgebildet und öffnet sich mit einem Winkel W, der vorzugsweise als spitzer Winkel im Bereich von 0° bis 90° ausgebildet ist. Besonders bevorzugt ist der Winkel W kleiner als ca. 45° und mehr bevorzugt kleiner als 20°. Der Öffnungswinkel W sowie die Erstreckung der Unterbrechungsöffnung 42 in Axialrichtung kann je nach Schweißaufgabe unterschiedlich ausgebildet sein.

Der die Schulter 34 aufweisende Körper 38 ist relativ zu dem Stift 32 drehbar. Insbesondere ist der Körper 38 mit der Schulter 34 derart ausgebildet, dass er sich beim Reibrühren nicht dreht, sondern eine Drehzahl n=0 aufweist. Beispielsweise ist das Reibrührwerkzeug 30 bezüglich der Relativbewegbarkeit des Stiftes 32 und des Körpers 38 wie in der DE 10 2005 030 800 B4 offenbart ausgebildet.

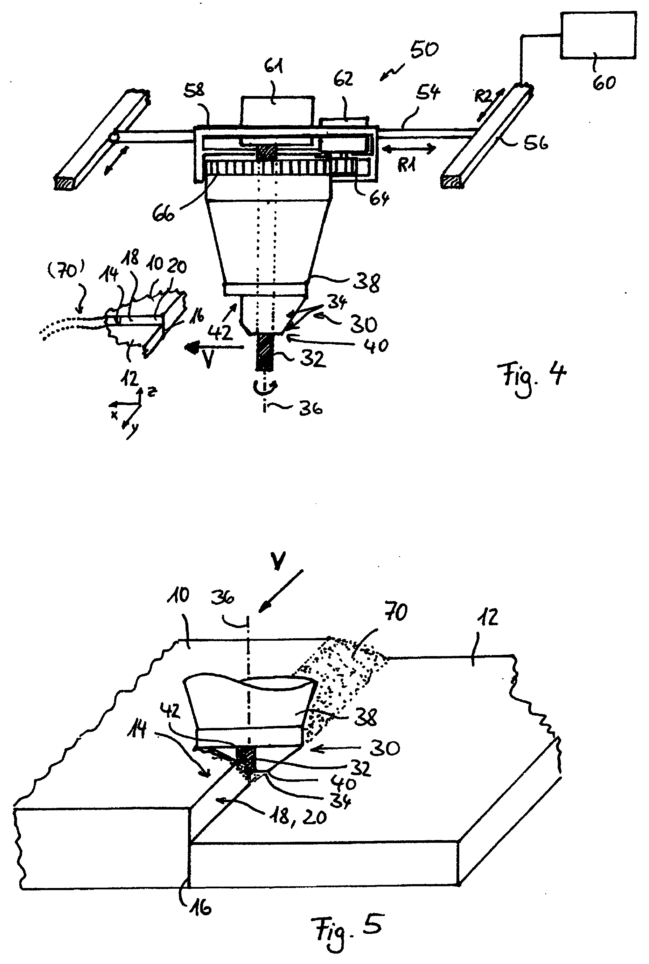

Fig. 4 zeigt ein Beispiel einer Reibrührvorrichtung 50 zum Reibrühren, die das Reibrührwerkzeug 30 mit der Unterbrechungsöffnung 42 an der Schulter 34 und eine Werkzeugbewegungseinrichtung 52 zum Bewegen und Führen des Reibrührwerkzeuges 30 aufweist.

Die Werkzeugbewegungseinrichtung 52 ist zum Führen und Bewegen des Reibrührwerkzeugs 30 in unterschiedliche Richtungen ausgebildet. Hierzu ist in dem in Fig. 4 dargestellten Beispiel, die eine einfache Ausführungsform der Werkzeugbewegungseinrichtung 52 andeutet, eine erste Führungseinrichtung 54 zum Bewegen des Reibrührwerkzeuges 30 in eine erste Richtung R1 (beispielsweise X-Richtung) und eine zweite Führungseinrichtung 56 zum Bewegen des Reibrührwerkzeuges 30 in eine zweite Richtung R2 (beispielsweise Y-Richtung) vorgesehen. Selbstverständlich kann auch noch eine (nicht dargestellte) dritte Führungseinrichtung zum Bewegen des Reibrührwerkzeuges 30 in eine dritte Richtung (beispielsweise Höhenrichtung, Z-Richtung) vorgesehen sein.

Die Reibrührvorrichtung 50 weist weiter einen Rahmen 58 oder ein Gehäuse auf, der bzw. das mittels der Werkzeugbewegungseinrichtung 52 gesteuert über eine Steuerung 60 in die jeweils zum Durchführen des gewünschten Reibrührprozesses zu bewegen ist.

An dem Rahmen 58 (oder dem Gehäuse) ist ein erster Drehantrieb 61 zum Drehen des Stiftes 32 vorgesehen.

In dem hier dargestellten Ausführungsbeispiel der Reibrührvorrichtung 50 ist weiter an dem Rahmen 58 (oder dem Gehäuse) ein durch die Steuerung 60 gesteuerter Schwenkantrieb 62 vorgesehen, mittels dem der Körper 38 mit der Schulter 34 in eine beliebige Winkelausrichtung bewegbar ist, wo der Körper 38 dann festgehalten wird. Der Schwenkantrieb 62 steht beispielsweise über ein Zahnrad 64 und einen Zahnkranz 66 mit dem Körper 38 in Verbindung. Beispielsweise weist der Schwenkantrieb 62 einen Schrittmotor auf.

Die Steuerung 60 ist vorzugsweise derart ausgebildet, dass mit der Reibrührvorrichtung 50 ein Reibrührschweißen zum Verbinden des ersten Werkstückes 10 und des zweiten Werkstückes 12 durchführbar ist. Hierzu wird der Stift 32 mit dem Drehantrieb 61 rotierend angetrieben und in den Bereich des Stumpfstoßes 16 (oder eines sonstigen Verbindungsbereichs) der Werkstücke 10, 12 eingeführt. Durch die Reibwärme zwischen Stift 32 und den Werkstücken 10, 12 werden die Materialien der Werkstücke 10, 12 plastifiziert. Zum Reibrühren wird dann das Reibrührwerkzeug 30 gesteuert über die Steuerung 60 in eine Vorschubrichtung V bewegt. Die Schulter 34 wird dabei durch den Schwenkantrieb 62 derart ausgerichtet, dass die Unterbrechungsöffnung 42 stets in Vorschubrichtung V zeigt.

Die Ausrichtung der Unterbrechungsöffnung 42 kann durch den Schwenkantrieb 62 entsprechend des Verlaufs des Stumpfstoßes 16 und abhängig von einer entsprechenden Änderung der Vorschubrichtung V geändert werden. Dies ist in Fig. 4 durch einen gekrümmten Verlauf des Stumpfstoßes 16 und den Kantenversatz 18 durch gepunktete Linien angedeutet; entlang dieses gekrümmten Verlaufs kann so auch eine gekrümmte Schweißnaht 70 gebildet werden.

Fig. 5 zeigt eine stark schematisierte Darstellung des Reibrührwerkzeuges 30 im Verlauf des Reibrührschweißens im Angriff an dem ersten Werkstück 10 und dem zweiten Werkstück 12.

Bisher ist stets davon ausgegangen worden, dass Schultern von Reibrührwerkzeugen vollumfänglich um den Stift 32 herum geführt sein müssen, damit sie ihre Aufgabe eines Zurückhaltens plastifizierten Materials an der Schweißstelle erfüllen können. Wie in Fig. 5 gezeigt, ist bei der nicht-vollumfänglichen Schulter 34 die Unterbrechungsöffnung 42 vorgesehen; hier erfüllt allerdings der Kantenversatz 18 der noch unverschweißten Werkstücke 10, 12 die Aufgabe des Zurückhaltens des plastifizierten Materials.

Versuche haben gezeigt, dass mit einem derartigen Reibrührwerkzeug 30 mit nicht-vollumfänglicher Schulter 34 ein Reibrühren von Werkstücken 10, 12 mit Kantenversatz 18 mit großer Prozesssicherheit durchgeführt werden kann, ohne dass ein schräger Anstellwinkel des Reibrührwerkzeuges 30 eingestellt werden müsste. Ein solcher schräger Anstellwinkel ist schwierig zu handhaben, insbesondere bei einem gekrümmten Verlauf der Schweißnaht 70, wie sie mit gepunkteten Linien in Fig. 4 angedeutet ist.

Verschiedene Ausgestaltungen des Reibrührwerkzeuges 30 und der Reibrührvorrichtung 50 sind möglich. So kann die Form der Unterbrechungsöffnung 42 von der dargestellten Form abweichen.

Anstelle der in Fig. 4 angedeuteten einfachen Version der Werkzeugbewegungseinrichtung 52 kann auch - wie gut bekannt - ein Roboterarm als Werkzeugbewegungseinrichtung 52 vorgesehen sein, an dessen Ende der Rahmen 58 bzw. das Gehäuse mit dem Drehantrieb 61 vorzusehen ist. Der Schwenkantrieb 62 kann beispielsweise durch eine entsprechende Schwenkmöglichkeit des Werkzeuganschlusses des Roboterarms gebildet sein.

Wenngleich das Reibrührwerkzeug 30 und die Reibrührvorrichtung 50 zum Verwenden als Reibrührschweißwerkzeug zum Verbinden von Werkstücken 10, 12 entlang einer Schweißnaht bzw. als Reibrührschweißvorrichtung zum Verbinden der Werkstücke 10, 12 entlang der Schweißnaht gezeigt und beschrieben worden ist, so sind die Verwendungsmöglichkeiten des Reibrührwerkzeugs 30 und der Reibrührvorrichtung 50 nicht auf diesen Anwendungsfall beschränkt. Es können auch andere Reibrühraufgaben, wie beispielsweise eine Glättung eines Kantenversatzes 18 an einem einstückigen Werkstück (nicht dargestellt) oder eine Reparatur eines Werkstücks im Bereich eines Kantenversatzes oder ähnliches, durchgeführt werden.

### Bezugszeichenliste

- 10: erstes Werkstück
- 12: zweites Werkstück
- 14: Werkstückoberfläche
- 16: Stumpfstoß
- 18: Kantenversatz
- 20: Stufe
- 30: Reibrührwerkzeug
- 32: Stift
- 34: Schulter
- 36: Drehachse
- 38: Körper
- 40: Erfassungsbereich
- 42: Unterbrechungsöffnung
- 50: Reibrührvorrichtung
- 52: Werkzeugbewegungseinrichtung
- 54: erste Führungseinrichtung
- 56: zweite Führungseinrichtung
- 58: Rahmen
- 60: Steuerung
- 61: Drehantrieb
- 62: Schwenkantrieb
- 64: Zahnrad
- 66: Zahnkranz
- 70: Schweißnaht
- W: Öffnungswinkel
- R1: erste Richtung
- R2: dritte Richtung
- V: Vorschubrichtung

## Patentansprüche

1. Reibrührwerkzeug (30) zum Reibrühren, mit einer Schulter (34) zum Anpressen auf eine Werkstückoberfläche (14) und einem über die Schulter (34) vorstehenden, drehend antreibbaren Stift (32) zum plastifizierenden Einführen in wenigstens ein zu bearbeitendes Werkstück (10, 12), **dadurch gekennzeichnet, dass** die Schulter (34) an einem Umfangsbereich in einem zum Reibangriff auf Werkstücke (10, 12) ausgebildeten Erfassungsbereich (40) eine Unterbrechungsöffnung (42) aufweist, die im Erfassungsbereich (40) durchgängig von außen bis hin zum Stift (32) reicht, so dass die Schulter (34) nicht vollumfänglich um den Stift (32) herum geführt ist.

2. Reibrührwerkzeug (30) nach Anspruch 1,
**dadurch gekennzeichnet,**
**dass** die Unterbrechungsöffnung (42) in Axialrichtung relativ zur Drehachse (36) des Stifts (32) gesehen kreissegmentförmig ausgebildet ist.

3. Reibrührwerkzeug (30) nach einem der voranstehenden Ansprüche,
**dadurch gekennzeichnet,**
**dass** das Reibrührwerkzeug (30) als Reibrührschweißwerkzeug zum Verbinden zweier Werkstücke (10, 12) entlang einer Schweißnaht (70) durch Reibrührschweißen ausgebildet ist.

4. Reibrührwerkzeug (30) nach einem der voranstehenden Ansprüche,
**dadurch gekennzeichnet,**
**dass** der Stift (32) relativ zu der Schulter (34) drehbar ist und/oder dass die Schulter (34) dazu ausgebildet ist, bei im Zuge des Reibrührens drehendem Stift (32) eine Drehzahl n=0 aufzuweisen.

5. Reibrührvorrichtung (50) umfassend ein Reibrührwerkzeug (30) nach einem der voranstehenden Ansprüche und eine Werkzeugführungseinrichtung (54, 56) zum Bewegen und Führen des Reibrührwerkzeugs (30) in eine Vorschubrichtung (V) während eines Nahtschweißens, wobei die Unterbrechungsöffnung (42) in Vorschubrichtung (V) gerichtet ist.

6. Reibrührverfahren zur Bearbeitung wenigstens eines Werkstücks (10, 12) mittels Reibrührens, umfassend die Schritte:
Einführen eines drehenden Stiftes (32) in das wenigstens eine Werkstück (10, 12) und Plastifizieren des Werkstückmaterials durch Reibrühren,
Verhindern eines Austretens von plastifiziertem Material durch Aufpressen einer den Stift (32) umgebenden Schulter (34) mit einem zum Reibangriff auf Werkstücke (10, 12) ausgebildeten Erfassungsbereich (40) auf die Oberfläche (14) des wenigstens einen Werkstücks (10, 12), **dadurch gekennzeichnet, dass** eine Schulter (34) mit einer Unterbrechungsöffnung (42) an einem Umfangsbereich verwendet wird, wobei die Unterbrechungsöffnung (42) im Erfassungsbereich (40) durchgängig von außen bis hin zum Stift (32) reicht, so dass die Schulter (34) den Stift (32) nicht vollständig umgibt.

7. Reibrührverfahren nach Anspruch 6,
**dadurch gekennzeichnet,**
**dass** es ein Reibrührschweißverfahren zum Verbinden eines ersten und eines zweiten Werkstücks (10, 12) mittels Reibrührschweißens ist.

8. Reibrührverfahren nach Anspruch 7,
**gekennzeichnet durch**
Bewegen des Stifts (32) und der Schulter (34) in einer Vorschubrichtung (V) zum Bilden einer Schweißnaht (70),
Festhalten der Schulter (34) während des Schweißvorganges bei drehendem Stift (32) mit in Vorschubrichtung (V) orientierter Unterbrechungsöffnung (42), so dass die Schulter (34) nicht drehend mit nach vorne in Vorschubrichtung (V) orientierter Unterbrechungsöffnung (42) über die zu bildende Schweißnaht (70) bewegt wird.

9. Reibrührverfahren nach einem der Ansprüche 7 oder 8,
**gekennzeichnet durch**
Verschweißen des ersten Werkstückes (10) und des zweiten Werkstückes (12) entlang einer Stufe (20) oder eines Kantenversatzes (18) zwischen den Werkstücken (10, 12).

## Claims

1. A friction stir processing tool (30) for friction stir processing, comprising: a shoulder (34) configured to press against a workpiece surface (14); and a pin (32) protruding beyond the shoulder (34) being rotatably drivable, the pin (32) being configured for plasticizing introduction into at least one workpiece (10, 12) to be processed, **characterized in that** the shoulder (34) has an interruption opening (42) provided on a circumferential region and in an engagement region (40) configured for frictional engagement of workpieces (10, 12), wherein the interruption opening (42) continuously extends from the outside to the pin (32), so that the shoulder (34) is not led around an entire circumference of the pin (32).

2. The friction stir processing tool (30) according to claim 1, **characterized in that** the interruption opening (42) is configured as a circular segment when viewed in an axial direction with respect to the rotational axis (36) of the pin (32).

3. The friction stir processing tool (30) according to any of the preceding claims, **characterized in that** the friction stir processing tool (30) is configured as a friction stir welding tool for connecting two workpieces (10, 12) along a weld seam (70) by friction stir welding.

4. The friction stir processing tool (30) according to any of the preceding claims, **characterized in that** the pin (32) is rotatable relative to the shoulder (34) and/or the shoulder (34) is configured to have a speed n=0 with the pin (32) rotating during the friction stir processing.

5. A friction stir processing device (50), comprising a friction stir processing tool (30) according to any of the preceding claims, and a tool guide unit (54, 56) configured to move and guide the friction stir processing tool (30) in a feed direction (V) during seam welding, wherein the interruption opening (42) is oriented in the feed direction (V).

6. A friction stir processing method for processing at least one workpiece (10, 12) by friction stir processing, comprising the steps:
introducing a rotating pin (32) into the at least one workpiece (10, 12) and plasticizing the workpiece material by friction stir processing,
preventing an escape of plasticized material by pressing a shoulder (34) enclosing the pin (32) against the surface of the at least one workpiece (10, 12), **characterized in that** a shoulder (34) having an interruption opening (42) provided on a circumferential region is used, wherein the interruption opening (42) continuously extends from the outside to the pin (32) in an engagement region (40), so that the shoulder (34) is not led around an entire circumference of the pin (32).

7. The friction stir processing method according to claim 6, **characterized in that** the friction stir processing method is a friction stir welding method for connecting a first and a second workpiece (10,12) by friction stir welding.

8. The friction stir processing method according to claim 7, **characterized by**
moving the pin (32) and the shoulder (34) in a feed direction (V) so as to form a weld seam,
stationary holding the shoulder (34) during the welding operation with the pin (32) rotating, with the interruption opening (42) oriented in the feed direction (V), so that the shoulder (34) is moved over the weld seam (70) to be formed in a nonrotating manner with the interruption opening (42) oriented forward in the feed direction (V).

9. The friction stir processing method according to any of the claims 7 or 8, **characterized by**
welding the first workpiece (10) and the second workpiece (12) along a step (20) or an edge offset (18) between the workpieces (10,12).

## Revendications

1. Outil d'agitation-friction (30) destiné à effectuer une agitation-friction, comprenant un épaulement (34) destiné à être pressé sur une surface (14) d'une pièce à oeuvrer, et avec une tige (32) dépassant au-delà de l'épaulement (34) et susceptible d'être entraînée en rotation, destinée à être introduite avec effet de plastification dans une pièce à oeuvrer (10, 12), **caractérisé en ce que** l'épaulement (34) comporte, sur une zone périphérique dans une zone d'emprise (40) réalisée en vue d'un engagement de friction sur des pièces à oeuvrer (10, 12), une ouverture d'interruption (42) qui, dans la zone d'emprise (40) s'étend en continu depuis l'extérieur jusqu'à la tige (32), de sorte que l'épaulement (34) n'est pas guidé sur la totalité de la périphérie autour de la tige (32).

2. Outil d'agitation-friction (30) selon la revendication 1,
**caractérisé en ce que** l'ouverture d'interruption (42) est réalisée en forme de segment circulaire, vu en direction axiale par rapport à l'axe de rotation (36) de la tige (32).

3. Outil d'agitation-friction (30) selon l'une des revendications précédentes,
**caractérisé en ce que** l'outil d'agitation-friction (30) est réalisé comme un outil de soudage par agitation-friction destiné à relier deux pièces à oeuvrer (10, 12) le long d'un cordon de soudure (70) par soudage par agitation-friction.

4. Outil d'agitation-friction (30) selon l'une des revendications précédentes,
**caractérisé en ce que** la tige (32) est capable de rotation par rapport à l'épaulement (34) et/ou **en ce que** l'épaulement (34) est réalisé pour avoir, lorsque la tige (32) tourne au cours de l'agitation-friction, une vitesse de rotation n=0.

5. Dispositif d'agitation-friction (50) incluant un outil d'agitation-friction (30) selon l'une des revendications précédentes, et un moyen de guidage d'outil (54, 56) pour déplacer et guider l'outil d'agitation-friction (30) dans une direction d'avance (V) pendant un soudage le long d'un cordon de soudure, dans lequel l'ouverture d'interruption (42) est orientée dans la direction d'avance (V).

6. Procédé d'agitation-friction pour le traitement d'au moins une pièce à oeuvrer (10, 12) au moyen d'une agitation-friction, incluant les étapes consistant à :
introduire une tige en rotation (32) dans ladite au moins une pièce à oeuvrer (10, 12) et faire plastifier le matériau de la pièce à oeuvrer par agitation-friction,
empêcher un échappement du matériau plastifié par pressage d'un épaulement (34) qui entoure la tige (32) avec une zone d'emprise (40) réalisée en vue d'un engagement de friction sur les pièces à oeuvrer (10, 12), sur la surface (14) de ladite au moins une pièce à oeuvrer (10, 12),
**caractérisé en ce qu'**on utilise un épaulement (34) avec une ouverture d'interruption (42) sur une zone périphérique, tel que l'ouverture d'interruption (42) s'étend, dans la zone d'emprise (40), en continu de l'extérieur jusqu'à la tige (32), de sorte que l'épaulement (34) n'entoure pas entièrement la tige (32).

7. Procédé d'agitation-friction selon la revendication 6,
**caractérisé en ce qu'**il s'agit d'un procédé de soudure par agitation-friction destiné à relier une première et une seconde pièce à oeuvrer (10, 12) au moyen d'une soudure par agitation-friction.

8. Procédé d'agitation-friction selon la revendication 7,
**caractérisé par** les étapes consistant à :
déplacer la tige (32) et l'épaulement (34) dans une direction d'avance (V) pour former un cordon de soudure (70),
maintenir fermement l'épaulement (34) pendant le processus de soudage alors que la tige est en rotation (32) avec une ouverture d'interruption (42) orientée dans la direction d'avance (V), de sorte que l'épaulement (34) n'est pas déplacé en rotation avec l'ouverture d'interruption (42) orientée en avant dans la direction d'avance (V), au-delà du cordon de soudure à réaliser (70).

9. Procédé d'agitation-friction selon l'une des revendications 7 ou 8, **caractérisé par** l'étape consistant à souder la première pièce à oeuvrer (10) et la seconde pièce à oeuvrer (12) le long d'un gradin (20) ou le long d'un décalage (18) des arêtes entre les pièces à oeuvrer (10, 12).
